Europäisches Patentamt

European Patent Office

Office européen des brevets

(19)

(11) Veröffentlichungsnummer : **0 119 407**
**B1**

(12) **EUROPÄISCHE PATENTSCHRIFT**

(45) Veröffentlichungstag der Patentschrift :
**30.12.86**

(21) Anmeldenummer : **84100772.7**

(22) Anmeldetag : **25.01.84**

(51) Int. Cl.⁴ : **A 01 B   3/42,** A 01 B 59/043,
A 01 B 15/00

(54) **Anbaupflug.**

(30) Priorität : **19.02.83 DE 3305860**

(43) Veröffentlichungstag der Anmeldung :
**26.09.84 Patentblatt 84/39**

(45) Bekanntmachung des Hinweises auf die Patenterteilung : **30.12.86 Patentblatt 86/52**

(84) Benannte Vertragsstaaten :
**AT BE DE FR GB IT NL**

(56) Entgegenhaltungen :
**CH-A-    527 551**
**DE-A- 2 554 273**
**DE-B- 1 177 392**
**DE-B- 1 197 662**
**DE-B- 1 232 779**
**DE-B- 2 018 904**
**DE-U- 1 702 716**

(73) Patentinhaber : **Rabewerk Heinrich Clausing**

**D-4515 Bad Essen 8 - Linne (DE)**

(72) Erfinder : **Schröer, Friedrich, Dipl.-Ing.**
**Im Weidengrund 5**
**D-4515 Bad Essen 1 (DE)**

(74) Vertreter : **Missling, Arne, Dipl.-Ing. et al**
**Patentanwälte Dipl.-Ing. R. Schlee Dipl.-Ing. A. Mis-**
**sling Bismarckstrasse 43**
**D-6300 Giessen (DE)**

## Beschreibung

Die Erfindung betrifft einen Anbaupflug mit einer Pflugkoppel, die Anlenkpunkte für ein Dreipunktgestänge eines Schleppers aufweist und mit einem Pflugrahmen, dessen Ende mit einem Stützrad versehen ist.

Anbaupflüge weisen den Vorteil auf, daß diese leicht zu transportieren sind und ohne Schwierigkeiten am Ende der Furche ausgehoben und, falls es sich um Drehpflüge handelt, gewendet und wieder eingezogen werden können. Das benötigte Vorgewende kann sehr klein gehalten werden. Diese Anbaupflüge werden mit vielen Pflugscharen gebaut, wobei das gesamte Gewicht dieses Pfluges beim Transport wie auch beim Ackern vom Schlepper getragen wird. Üblicherweise haben die großen Anbaupflüge ein Land-Stützrad am Ende ihres Pflugrahmens, das dazu bestimmt ist, die Tiefenhaltung des Anbaupfluges zu verbessern. Dieses Stützrad übernimmt jedoch nur einen geringen Teil des Gewichtes des Pfluges beim Pflügen, so daß beim Pflügen die Schlepperhinterräder sehr stark belastet werden. Diese Belastung der Schlepperhinterräder ist jedoch bei mehrscharigen Pflügen größer als dies für die Übertragung der Schlepperleistung benötigt wird. Die Folge ist, daß insbesondere bei weichen und feuchten Böden die Schlepperhinterräder sehr tief in den Boden einsinken, so daß hierdurch der Zugkraftbedarf deutlich ansteigt. Oft läuft auch das Landstützrad des Pfluges in der Spur des Schlepper-Landrades. Sobald der Schlepper bei größerem Zugkraftbedarf und somit größerem Schlupf tiefere Spuren hinterläßt, vergrößert sich die Arbeitstiefe des Pfluges mit dem Ergebnis, daß der Schlepper stärker belastet wird und sich festfährt. Diese Nachteile werden zwar bei Anhängepflügen und auch bei Aufsattelpflügen weitgehend vermieden, jedoch zeigen diese Pflüge wiederum den Nachteil, daß sie ein relativ großes Vorgewende erfordern und auch wesentlich schwieriger in die neue Pflügrichtung zu wenden sind.

Der Erfindung liegt die Aufgabe zugrunde, einen Anbaupflug der eingangs genannten Art so auszubilden, daß die Belastung des Schleppers beim Pflügen durch den Pflug den herrschenden Bodenverhältnissen anpaßbar ist, daß der Pflug einen geringeren Zugkraftbedarf erfordert und daß die Bodenoberfläche besser kopiert wird, d. h. daß die Tiefenhaltung verbessert wird.

Diese Aufgabe wird mit einem Pflug gemäß den Merkmalen des kennzeichnenden Teils des Anspruches 1 gelöst.

Bei einem erfindungsgemäß ausgebildeten Pflug ist der Oberlenker in der Pflugkoppel mit einem bestimmten Spiel angelenkt, so daß der Oberlenker beim Pflügen frei spielen kann. Des weiteren ist der erfindungsgemäße Pflug mit einem hinteren Stützrad versehen, das als Furchenrad ausgebildet ist und den Pflug am hinteren Ende trägt. Dies ist dadurch möglich geworden, daß beim Pflügen der Oberlenker frei in der Pflugkoppel spielen kann, so daß vom Schlepper, d. h. über die unteren Lenker des Dreipunktgestänges, nur noch ein Teil des Gewichtes des Anbaupfluges aufgenommen werden muß. Das übrige Gewicht wird vom Furchenrad gegenüber dem Boden abgestützt. Wird der erfindungsgemäße Pflug angehoben, so legt sich der Oberlenker wieder an einen Anschlag an, wobei der Pflug in üblicher Weise wie ein Anbaupflug ausgehoben werden kann und beim Transport in vollem Umfange vom Schlepper getragen wird.

Das Spiel des Oberlenkers in der Pflugkoppel ist einstellbar, so daß hierdurch die Beweglichkeit des Pfluges gegenüber dem Schlepper festlegbar ist. Hierdurch kann ein erheblicher Teil des Gewichtes des Pfluges vom hinteren Furchenrad aufgenommen werden, so daß hierdurch die Schlepperhinterräder entlastet werden, so daß diese weniger tief in den Boden einsinken und somit auch der Widerstand und damit der erforderliche Zugkraftbedarf reduziert wird. Das untere Furchenrad läuft in der Furche auf festem, trockenem Boden und hat somit wenig Rollwiderstand. Das Furchenrad hat jedoch noch eine weitere Funktion. Dieses trägt den Pflugrahmen, so daß hierdurch die Reibungskräfte der Pflugkörper weiter reduziert werden. Gemäß einer vorteilhaften Ausführungsform der Erfindung steht das hintere Furchenrad schräg und stützt den Pflugrahmen sowohl gegenüber der Furchensohle als auch gegenüber der Furchenwand ab, so daß die Reibungskräfte weiter vermindert werden und gleichzeitig der Zugkraftbedarf. Bei einer derartigen Anordnung des Furchenrades kann die Sohle wie auch die Anlage am letzten Pflugkörper entfallen.

Die Kombination der begrenzten Beweglichkeit des Oberlenkers in der Pflugkoppel sowie die Verwendung eines Furchenrades bringt somit den Vorteil mit sich, daß das Schleifen an Sohle und Anlage entfällt, der Pflug somit leichtzügiger wird. Des weiteren wird das Verhältnis zwischen der Vorderachs- und der Hinterachsbelastung des Schleppers während der Arbeit wesentlich günstiger, wodurch sich eine weitere Zugkraftverringerung ergibt. Des weiteren ist es möglich, die durch den Pflug auf den Schlepper ausgeübte Belastung während des Pflügens besser der Tragkraft des Schleppers anzupassen. Bei Bodenwellen führt die Anlenkung des Oberlenkers mit Spiel in der Pflugkoppel dazu, daß die Oberfläche besser kopiert wird. Darüberhinaus zeigt sich noch der Vorteil, daß die erforderliche Länge des Oberlenkers aufgrund des Spiels in der Pflugkoppel besser erkennbar und einstellbar ist. Des weiteren wird noch der Vorteil erreicht, daß der Schlepper sich beim Überfahren von Bodenwellen nicht oder nicht so leicht aufbäumt, so daß die Lenkräder den Bodenkontakt behalten.

Weitere vorteilhafte Ausgestaltungen der Erfindung gehen aus den Patentansprüchen in Verbindung mit Zeichnung und Beschreibung hervor.

Ein Ausführungsbeispiel der Erfindung ist im folgenden anhand der Zeichnung näher beschrieben, in dieser zeigen :

Figur 1 einen Anbaupflug gemäß der Erfindung in Seitenansicht,

Figur 2 eine Ansicht des hinteren Stützrades, teilweise im Schnitt,

Figur 3 einen Schnitt durch das Stützrad, die dessen Lage relativ zur Furche zeigt und

Figur 4 ein weiteres Ausführungsbeispiel eines Anbaupfluges gemäß der Erfindung mit einem Pendelstützrad.

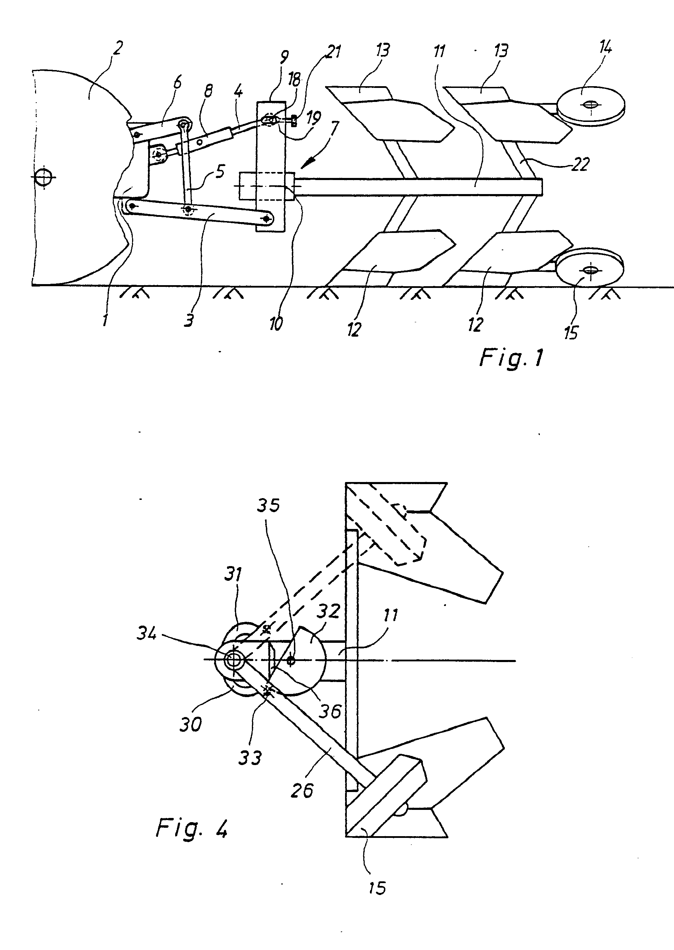

In Fig. 1 bezeichnet 1 den Schlepper mit seinen Hinterrädern 2. Die Unterlenker des Dreipunktgestänges sind mit 3 und der Oberlenker mit 4 bezeichnet. An den Unterlenkern 3 greift das Hubgestänge 5, 6 an, über das die Unterlenker und damit der Anbaupflug 7 getragen werden. Die Länge des Oberlenkers 4 ist mittels eines Spannschlosses 8 einstellbar.

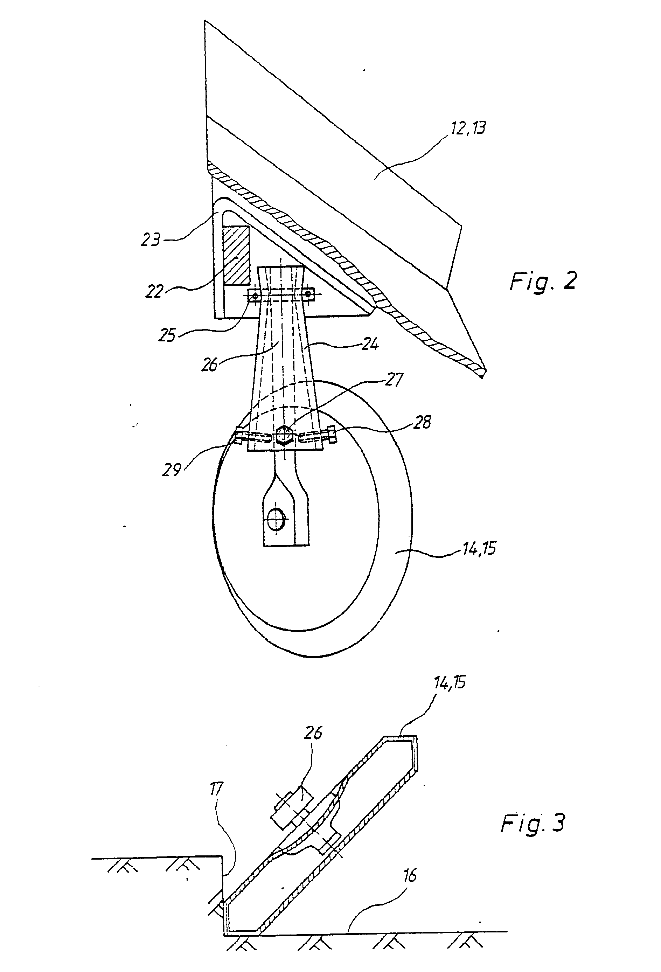

Der Anbaupflug 7 besteht aus einer Pflugkoppel 9, an der die Unterlenker 3 und der Oberlenker 4 angeschlossen sind. In der Pflugkoppel 9 ist ein Drehlager 10 für den Pflugrahmen 11 angeordnet, der zwei links- und rechtswendende Pflugkörper 12, 13 aufweist. Die Dreheinrichtung für das Wenden der Pflugkörper ist der Übersichtlichkeit halber nicht dargestellt worden. Dem jeweils hinteren links- bzw. rechtswendenden Pflugkörper 12, 13 ist je ein Stützrad 14, 15 zugeordnet, das als Furchenrad ausgebildet ist und, wie in Fig. 3 dargestellt ist, derart schrägstehend angeordnet ist, daß sich das Stützrad 14, 15 sowohl an der Furchensohle 16 als auch an der Furchenwand 17 abstützt.

Der Oberlenker 4 ist in der Pflugkoppel 9 an seinem Ende mit einem Bolzen 18 versehen, der in einer Ausnehmung 19 in der Pflugkoppel gleitet. Die Ausnehmung 19 weist eine bestimmte Länge auf, wobei die Ausnehmung durch mindestens einen Gewindebolzen 21 in der Länge einstellbar ist. Die Länge des Oberlenkers wird so gewählt, daß in der Arbeitsstellung des Pfluges, wie sie in Fig. 1 dargestellt ist, der Bolzen 18 des Oberlenkers 4 in etwa in der Mitte der Ausnehmung 19 liegt. Beim Pflügen wird sich der Bolzen 18 in der Ausnehmung 19 verschieben, wobei dieser auch zur Anlage an den Seitenwänden der Ausnehmung 19 gelangen kann. Die beim Anschlagen erhaltenen Impulse können zur Steuerung der Regelhydraulik für die Positionsstellung der unteren Lenker 3 verwendet werden.

Die Ausnehmung 19 der Pflugkoppel kann auch durch ein zwischen Anschlägen frei bewegliches Schwenkstück oder durch einen zwischen Anschlägen frei in der Länge veränderbaren Oberlenker ersetzt werden.

Die Anlenkung des hinteren Stützrades 14 bzw. 15 ist in Fig. 2 dargestellt. Der Pflugkörper 12, 13 ist am Grindel 22 mit seiner Pflugkörperbrust 23 befestigt. An der Pflugkörperbrust 23 ist des weiteren eine trichterförmige Tasche 24 befestigt, in der mittels eines Bolzens 25 ein das Stützrad 14, 15 tragender Stützradstiel 26 angelenkt ist. Die Beweglichkeit des Stützradstieles 26 um den Bolzen 25 ist durch zwei in der trichterförmigen Tasche eingeschraubte Gewindebolzen 27 zum einen beschränkt und zum anderen einstellbar. Die seitliche Beweglichkeit des Stützradstieles, die durch ein gewisses Spiel des Stützradstieles 26 um den Bolzen 25 in seitlicher Richtung erhalten wird, wird durch zwei weitere Gewindebolzen 28, 29 begrenzt und eingestellt, die gleichfalls in der trichterförmigen Tasche befestigt sind. Mit Hilfe dieser vier Bolzen kann die relative Lage des Stützrades relativ zu den Pflugkörpern sehr genau eingestellt werden, so daß die gewünschte seitliche Abstützung an der Furchenwand wie auch die Abstützung nach unten auf der Furchensohle erhalten wird, wie dies in Fig. 3 dargestellt ist.

Anstelle der zwei Stützräder 14, 15 kann auch ein an sich bekanntes Pendelstützrad verwendet werden, das jedoch eine gleiche Einstellvorrichtung aufweisen muß wie die dargestellten Stützräder, damit dieses in seiner Lage zum Boden anpaßbar ist.

In Fig. 4 ist ein Ausführungsbeispiel gezeigt, bei dem der Anbaupflug mit einem Pendelstützrad versehen ist. Das Pendelstützrad 15 ist mit seinem Stützradstiel an einer Schwenkachse 34 im Pflugrahmen 11 drehbar gelagert, und zwar zwischen zwei Anschlägen 30 und 31. Drehbar am Pflugrahmen 11 ist des weiteren eine Falle 32 angelenkt, die mit einem Vorsprung 33 des Stützradstiels 26 zusammenwirkt. Die Schwenkbarkeit dieser Falle 32 ist durch einen Anschlag 36 am Pflugrahmen 11 begrenzt. Wird der Pflugrahmen gewendet, so gelangt die Falle 32 außer Eingriff mit dem Vorsprung 33 des Stützradstiels, so daß das Stützrad aus der einen in die andere Arbeitsstellung verschwenken kann, wobei dieses dann die vorstehend beschriebene Funktion ausübt.

**Patentansprüche**

1. Anbaupflug mit einer Pflugkoppel (9), die Anlenkpunkte für ein Dreipunktgestänge eines Schleppers aufweist und mit einem Pflugrahmen (11) mit Pflugkörpern (12, 13), dessen Ende mit einem Stützrad (14, 15) versehen ist, dadurch gekennzeichnet, daß die Pflugkoppel (9) derart mit den Lenkern (3, 4) des Dreipunktgestänges des Pfluges verbunden ist, daß diese beim Pflügen in einem festlegbaren Bereich um die Anlenkpunkte der Unterlenker (3) frei beweglich ist und daß das Stützrad (14, 15) als ungefedertes Furchenrad ausgebildet ist.

2. Anbaupflug nach Anspruch 1, dadurch gekennzeichnet, daß der Oberlenker (4) des Dreipunktgestänges in einer in der Pflugkoppel (9) ausgebildeten Ausnehmung (19) eingreift, in der der Oberlenker (4) frei beweglich ist.

3. Anbaupflug nach Anspruch 1, dadurch gekennzeichnet, daß im Oberlenker (4) des Dreipunktgestänges ein Langloch zur Anlenkung des Oberlenkers an der Pflugkoppel (9) mit Spiel ausgebildet ist.

4. Anbaupflug nach Anspruch 1 bis 3, dadurch gekennzeichnet, daß die Größe des Weges, um den der Oberlenker (4) des Dreipunktgestänges frei beweglich ist, einstellbar ist.

5. Anbaupflug nach einem der Ansprüche 1 bis 4, dadurch gekennzeichnet, daß das Stützrad (14, 15) den Anbaupflug sowohl nach unten wie auch seitlich abstützt.

6. Anbaupflug nach Anspruch 5, dadurch gekennzeichnet, daß das Stützrad (14, 15) zwei unter einem Winkel von 90° zueinander stehende Laufradflächen aufweist (Fig. 3).

7. Anbaupflug nach einem der Ansprüche 1 bis 6, dadurch gekennzeichnet, daß die Neigung des Stützrades (14, 15) relativ zum Pflugrahmen (11) einstellbar ausgebildet ist.

8. Anbaupflug nach Anspruch 6, dadurch gekennzeichnet, daß die Neigung des Stützrades (14, 15) zur Lotrechten 45° beträgt.

9. Anbaupflug nach einem der Ansprüche 1 bis 8, dadurch gekennzeichnet, daß das Stützrad (14, 15) als Pendelstützrad ausgebildet ist.

10. Anbaupflug nach einem der Ansprüche 1 bis 9, dadurch gekennzeichnet, daß bei einem Anbaudrehpflug sowohl dem rechts- wie auch dem linkswendenden Pflugkörper (12, 13) je ein Stützrad zugeordnet ist.

11. Anbaupflug nach einem der Ansprüche 1 bis 8, dadurch gekennzeichnet, daß der Stützradstiel (26) in einer Tasche (24) geführt ist, in der die seitliche Beweglichkeit des Stützrades beschränkende einstellbare Anschläge (26, 27, 28) angeordnet sind.

12. Anbaupflug nach einem der Ansprüche 1 bis 11, dadurch gekennzeichnet, daß der Stützradstiel (26) des Stützrades (14, 15) mittelbar oder unmittelbar mit der Pflugkörperbrust (23) verbunden ist.

13. Anbaupflug nach einem der Ansprüche 1 bis 11, dadurch gekennzeichnet, daß der Stützradstiel (26) mit dem Pflugrahmen (11) verbunden ist.

14. Anbaupflug nach einem der Ansprüche 1 bis 13, dadurch gekennzeichnet, daß das Stützrad (14, 15) gleichzeitig die Anlagen des Pfluges bildet.

15. Anbaupflug nach einem der Ansprüche 1 bis 14, dadurch gekennzeichnet, daß das als Pendelstützrad ausgebildete Stützrad (14, 15) am Pflugrahmen (11) gelenkig angeordnet ist, daß der Schwenkbereich des Stützradstiels (26) durch zwei Anschläge (30, 31) begrenzt ist und daß eine gewichtsbelastete Falle (32), die mit einem Vorsprung (33) des Stützradstiels (26) zusammenwirkt, die Festlegung des Stützrades (14, 15) in der jeweiligen Arbeitsstellung bewirkt.

## Claims

1. A mounted plough with a plough coupling bar (9) comprising articulation points for a three-point rod system of a tractor and provided with a plough frame (11) with plough bases (12, 13), the end of which is provided with a supporting wheel (14, 15), characterized in that the plough coupling bar (9) is connected to the guide rods (3, 4) of the three-point rod system of the plough in such a way that during ploughing it is freely movable about the articulation points of the lower guide rods (3) in a predeterminable area and the supporting wheel (14, 15) is constructed as a furrow wheel without springs.

2. A mounted plough according to Claim 1, characterized in that the upper guide rod (4) of the three-point rod system engages in a recess (19) which is formed in the plough coupling bar (9) and in which the upper guide rod (4) is freely movable.

3. A mounted plough according to Claim 1, characterized in that an elongate hole for articulating the upper guide rod (4) of the three-point rod system on the plough coupling bar (9) with play is formed in the said upper guide rod.

4. A mounted plough according to Claims 1 to 3, characterized in that the size of the path about which the upper guide rod (4) of the three-point rod system is freely movable is adjustable.

5. A mounted plough according to any one of Claims 1 to 4, characterized in that the supporting wheel (14, 15) supports the mounted plough both downwards and laterally.

6. A mounted plough according to Claim 5, characterized in that the supporting wheel (14, 15) comprises two trailing wheel faces which face one another at an angle of 90° (Fig. 3).

7. A mounted plough according to any one of Claims 1 to 6, characterized in that the inclination of the supporting wheel (14, 15) is made adjustable relative to the plough frame (11).

8. A mounted plough according to Claim 6, characterized in that the inclination of the supporting wheel (14, 15) amounts to 45° to the vertical.

9. A mounted plough according to any one of Claims 1 to 8, characterized in that the supporting wheel (14, 15) is constructed as a pendulum supporting wheel.

10. A mounted plough according to any one of Claims 1 to 9, characterized in that in the case of a mounted rotary plough one supporting wheel is associated with both the right-turning and the left-turning plough base (12, 13) in each case.

11. A mounted plough according to any one of Claims 1 to 8, characterized in that the supporting wheel shaft (26) is guided in a sleeve (24) in which are provided adjustable stops (26, 27, 28) which limit the lateral movability of the supporting wheel.

12. A mounted plough according to any one of Claims 1 to 11, characterized in that the supporting wheel shaft (26) of the supporting wheel (14, 15) is connected directly or indirectly to the breast (23) of the plough base.

13. A mounted plough according to any one of Claims 1 to 11, characterized in that the supporting wheel shaft (26) is connected to the plough frame (11).

14. A mounted plough according to any one of Claims 1 to 13, characterized in that the supporting wheel (14, 15) at the same time forms the bearing means of the plough.

15. A mounted plough according to any one of Claims 1 to 14, characterized in that the supporting wheel (14, 15) formed as a pendulum supporting wheel is articulated on the plough frame (11), the pivoting range of the supporting wheel shaft (26) is limited by two stops (30, 31), and a weighted catch (32) which cooperates with a projection (33) on the supporting wheel shaft (26) secures the supporting wheel (14, 15) in the respective operating position.

### Revendications

1. Charrue portée comportant une potence (9) qui présente des points d'articulation pour un attelage trois points d'un tracteur, et un bâti (11) qui porte des socs (12, 13) et qui est pourvu à son extrémité d'une roue d'appui (14, 15), caractérisée en ce que la potence (9) est reliée aux barres (3, 4) de l'attelage trois points du tracteur de façon à être, lors du labourage, mobile librement, dans un domaine qu'on peut être fixé, autour des points d'articulation des barres inférieures (3), et en ce que la roue de support (14, 15) est une roue de sillon non chargée par ressort.

2. Charrue portée selon la revendication 1, caractérisée en ce que la barre supérieure (4) de l'attelage trois points est engagée dans un évidement (19) fait dans la potence (9) dans lequel elle peut se déplacer librement.

3. Charrue portée selon la revendication 1, caractérisée en ce que la barre supérieure (4) de l'attelage trois points présente un trou allongé pour l'articulation avec jeu de ladite barre à la potence (9).

4. Charrue portée selon les revendications 1 à 3, caractérisée en ce que la latitude de déplacement de la barre supérieure (4) de l'attelage trois points est réglable.

5. Charrue portée selon l'une des revendications 1 à 4, caractérisée en ce que la roue d'appui (14, 15) la retient à la fois vers le bas et latéralement.

6. Charrue portée selon la revendication 5, caractérisée en ce que la roue d'appui (14, 15) présente deux surfaces de roulement faisant entre elles un angle de 90° (fig. 3).

7. Charrue portée selon l'une des revendications 1 à 6, caractérisée en ce que l'inclinaison de la roue d'appui (14, 15) par rapport au bâti (11) est réglable.

8. Charrue portée selon la revendication 6, caractérisée en ce que l'inclinaison de la roue d'appui (14, 15) par rapport à la verticale est de 45°.

9. Charrue portée selon l'une des revendications 1 à 8, caractérisée en ce que la roue d'appui (14, 15) est une roue d'appui pendulaire.

10. Charrue portée selon l'une des revendications 1 à 9, caractérisée en ce que dans le cas d'une charrue réversible portée, une roue d'appui est adjointe aussi bien aux socs (12, 13) déversant à droite qu'aux socs déversant à gauche.

11. Charrue portée selon l'une des revendications 1 à 8, caractérisée en ce que le bras (26) de la roue d'appui est monté dans une poche (24) dans laquelle sont placées des butées réglables (27, 28, 29) qui limitent la mobilité latérale de la roue de support.

12. Charrue portée selon l'une des revendications 1 à 11, caractérisée en ce que le bras (26) de la roue d'appui (14, 15) est relié indirectement ou directement à la pièce de support (23) d'un soc.

13. Charrue portée selon l'une des revendications 1 à 11, caractérisée en ce que le bras (26) de la roue d'appui est relié au bâti (11).

14. Charrue portée selon l'une des revendications 1 à 13, caractérisée en ce que la roue d'appui (14, 15) constitue en même temps un frayon de la charrue.

15. Charrue portée selon l'une des revendications 1 à 14, caractérisée en ce que la roue d'appui (14, 15), pendulaire, est montée de manière articulée sur le bâti (11), que le domaine de rotation du bras (26) de la roue d'appui est limité par deux butées (30, 31), et qu'un verrou lesté (32) coopérant avec une saillie (33) du bras de roue (26) immobilise la roue d'appui (14, 15) dans la position de travail choisie.

Fig. 1

Fig. 4

Fig. 2

Fig. 3